Europäisches Patentamt

European Patent Office

Office européen des brevets

(11) Publication number: **0 185 531**
A1

# (12) EUROPEAN PATENT APPLICATION

(21) Application number: 85309124.7

(22) Date of filing: 16.12.85

(51) Int. Cl.⁴: **F 16 H 55/50**

(30) Priority: 19.12.84 ZA 849880

(43) Date of publication of application:
25.06.86 Bulletin 86/26

(84) Designated Contracting States:
DE GB

(71) Applicant: THOMAS AND PILLINER (PROPRIETARY LIMITED)
Smits Street
Industries West Germiston Transvaal(ZA)

(72) Inventor: Pilliner, Reginald Spencer Hylton
206 Kent Place North Venus Street
Birdhaven Johannesburg Transvaal(ZA)

(74) Representative: Pratt, David Martin et al,
Brookes & Martin High Holborn House 52/54 High Holborn
London. WC1V 6SE(GB)

(54) Sheave wheel.

(57) The invention relates to a sheave arrangement having a replaceable wear surface (8) in a circumferential groove (1a) thereof. The groove (1a) defines a seat zone for the replaceable wear elements (8a, 8b) defining the wear surface (8), which seat zone is defined between a pair of opposed converging side wall surfaces (3a, 4a) and a base surface (5). The arrangement is characterised in that the wear elements (8a, 8b) are constituted by pairs of wedge-like members, and by the provision of a compression pad (13) of resilient polymeric material sandwiched between the wear elements and one of the surfaces (5) defining the seat zone.

FIG 1

EP 0 185 531 A1

SHEAVE WHEEL

THIS invention relates to sheaves or sheave wheels and more particularly but not exclusively it relates to sheave wheels of the type used in walking drag line arrangements as currently used in open pit mining operations.

Sheave wheels are commonly constituted by a hub, a rim and a plurality of spokes [or a diaphragm] interconnecting the hub and the rim.

In sheave wheels the rim defines a circumferential rope receiving groove presenting a wearing surface which defines the effective circumference of the sheave. This wearing surface is often disposed between and transversely to a pair of generally radially extending flange formations which diverge outwardly from the wearing surface. In use the flanges serve a guiding function in that they guide a rope or line which is received partway about the sheave towards the wearing surface.

The wearing surfaces of sheaves of the type in question are subjected to considerable frictional forces and accordingly require regular conditioning. It is known in the trade to provide a sheave having a wearing surface constituted by a plurality of segmental inserts of wedge-like shape which are captively held in the base zone of the circumferential groove in the rim of the sheave being firmly wedged in the groove.

The inserts presently used in sheaves of the type in question are produced from a resilient material which allows a degree of compression of the inserts when they are urged into the slot. The material is often a polymeric material which has wearing characteristics substantially inferior to the wearing characteristics of some known rigid materials, such as metals or rigid polymeric compositions.

Although it may be possible in theory to utilise rigid tight fitting inserts to constitute a wearing surface for a sheave of the type in question, the expense associated with machining the slot or groove and the inserts to a tolerance which would ensure proper seating and retention of the insert in the slot, does not make it a feasible alternative.

The cost of lost production during down time of a walking drag line makes it desirable to use rigid wear surface inserts with wearing properties superior to the materials currently employed and to provide a replaceable wearing surface which may be installed without removing the sheave from its mounting.

It is an object of the present invention to provide an arrangement whereby inserts of a material of lower resilience than those presently employed may be used to constitute a wearing surface in a sheave of the type in question.

According to the invention a sheave assembly comprises a rim provided with a circumferential rope receiving groove, the groove being bordered by a base surface and opposing side surfaces, the groove defining a seat zone towards the inner extremity thereof and a guide zone towards the outer extremity thereof; the opposing surfaces of the groove in the guide zone diverging relative to one another in the outward direction and the opposing surfaces of the groove in the seat zone converging relative to one another in the outward direction, the seat zone of the groove being fitted with a replaceable circumferential wearing arrangement constituted by a plurality of paired wedge-like rigid insert members, the cross-sectional configuration of the pairs when in operative disposition corresponding substantially with the cross-sectional configuration of the seat zone of the groove and the arrangement further including resilient compression means firmly sandwiched between one surface of the seat zone of the groove and the facing surface of an insert pair located in the seat zone.

In one form of the invention the seat zone of the groove of the sheave is constituted by a base and opposing walls extending upwardly from the base and symmetrically converging towards one another. Thus the seat zone may be said to have a trapezoidal cross-sectional configuration. The term trapezoidal as used in this specification is intended to refer to a quadrilateral having only one pair of parallel sides.

The insert elements may comprise insert pairs, each of which pairs in operative registration of its members with one another collectively defining a composite elongated block of generally trapezoidal cross-sectional configuration defining a wear surface and a base surface parallel thereto, the base surface being of larger surface area than the wear surface, each insert pair registering along a split surface which extends at an angle to a notional longitudinal centre line of the composite block and at right angles to the base surface of the composite block constituted by the pairs.

The inserts may be of any suitable wear resistant material and may be either metallic or of synthetic or natural polymeric material.

The compression means may be in the form of a pad which may be of any suitable resilient material and of a thickness dependent on its degree of resilience.

In one form of the invention the compression pad is sandwiched between the base surfaces of the insert elements. Thus each compression pad may be bonded to the base surface of an insert element.

In a preferred form of the invention, however, the compression pad is sandwiched between a side surface of the seat zone of the groove and the facing surface of one of the members of the insert pairs.

Two examples of the invention will now be described with reference to the accompanying drawings without thereby limiting the scope of the invention to the disclosed embodiments.

Figure 1 of the accompanying drawings is a cross-section through the rim section of a sheave wheel according to the invention but is not drawn to scale.

Figure 2 of the accompanying drawings is a view similar to Figure 1 but illustrating a second preferred form of the invention.

In the accompanying drawings the same reference numerals are used to denote corresponding parts.

Referring now to the accompanying drawings a sheave wheel is shown to have a rim 1 connected via spokes [one of which is shown at 2] to a hub [not shown]. The rim 1 is provided with a circumferential groove 1a which is bordered by a pair of flanges 3 and 4 and a transverse base 5 at the inner extremity of the groove. The outer segments of the flanges 3 and 4 having facing wall surfaces 3a and 4a which diverge from one another in the outward direction and which define between them a guide zone of the groove. The inner segments of the flanges have facing wall sections 6 and 7 which converge towards one another which collectively define a seat zone in the groove with the base 5.

A wearing insert arrangement 8 is provided in the seat zone of the groove. The wearing insert comprises a pair of insert elements 8a and 8b which in operative alignment and registration collectively define an elongated block of truncated triangular or trapezoidal cross-sectional configuration. The insert elements 8a and 8b are substantially of identical shape and mate with one another along a split surface which extends substantially normally to the parallel surfaces 9 and 10 of the block and at an angle of about 5° to the longitudinal axis of the composite block. The extremities of the split surface are indicated at

11 and 12.

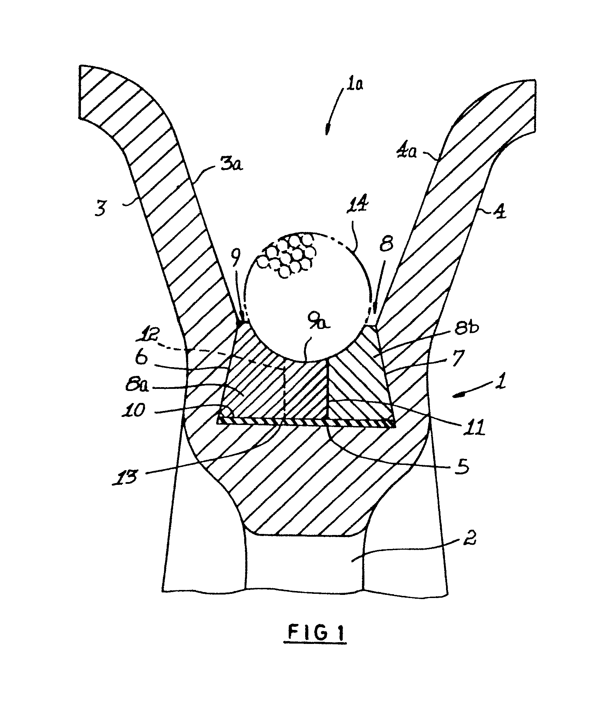

In the arrangement shown in Fig.1, a resilient compression pad 13 is sandwiched between the lower surface 10 of the composite block 8 and the base surface 5 of the slot. The compression pad 13 may be of any durable compressible material such as for example, TEFLON or HYTREL.

A wearing insert arrangement 8 is provided in the seat zone of the groove. The wearing insert comprises a pair of insert elements 8a and 8b which in operative alignment and registration collectively define an elongated block of truncated triangular or trapezoidal cross-sectional configuration. The insert elements 8a and 8b are substantially of identical shape and mate with one another along a split surface which extends substantially normally to the parallel surfaces 9 and 10 of the block and at an angle of about $5^{\circ}$ to the longitudinal axis of the composite block. The extremities of the split surface are indicated at 11 and 12.

In the arrangement shown in Fig.1, a resilient compression pad 13 is sandwiched between the lower surface 10 of the composite block 8 and the base surface 5 of the slot. The compression pad 13 may be of any durable compressible material such as for example, TEFLON or HYTREL.

In use the compression pad 13 is located in the slot and the two insert elements are located in off-set relationship relative to one another in the slot. The two elements 8a and 8b are then moved into registration with one another thereby firmly wedging the elements in the slot and compressing the compression pad 13 between the base 5 and the lower surface 10 of the insert elements. In a typical arrangement of the present invention the insert elements may have a height of 70mm and the pad may be a HYTREL sheet of 12.5 mm thickness. In use the pad is compressed to a final thickness in the slot of between about 9.4 mm and 11.2 mm.

HYTREL and TEFLON are both trade marks for a polymeric material produced and marketed by E.I. du Pont de Nemours & Co. Inc.

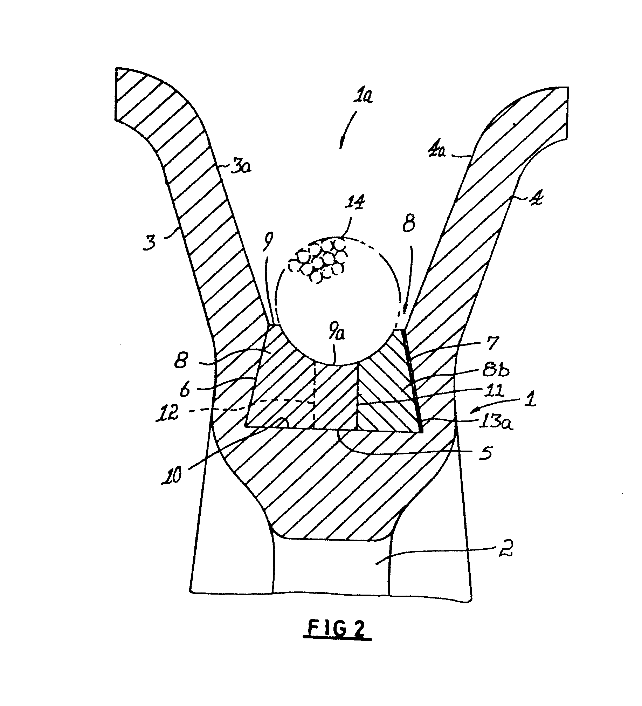

In the alternative arrangement shown in Figure 2 there is provided a compression pad 13a located between the side surface 7 of the seat zone of the groove of the sheave and the side surface of the insert element 8b.

This arrangement is considered to have particular advantages over known arrangements and even over the arrangement shown in Figure 1. One such advantage is that a thinner compression pad [13a] may be used and using HYTREL to produce the compression pad its thickness may be between about 3 - 4 mm. Another advantage is that the insert element 8b and pad 13a may be located in place in the groove as shown and the insert element 8a may then be driven home while it slides on metal surfaces on all three of its contact surfaces. Hence no sliding of metal over polymeric material is required and it will be appreciated that this feature greatly improves the tight seating of the inserts in the groove.

By providing a resilient compression pad 13 or 13a the necessity of having the slot and the insert elements machined to a very small tolerance is substantially reduced in instances where the insert element is of rigid material such as wear resistant metallic alloys.

After the insertion of the requisite number of insert elements a relatively small gap is left between two adjacent sets of insert elements and this gap is in use filled by means of a conventional three piece key arrangement as is presently known in the trade.

After constituting a wearing surface as described above, the wearing surface 9 may be grooved as shown at 9a to provide a seat for a cable or rope indicated at 14.

There may clearly be many variations of the basic inventive concept of the invention which differ from the disclosed embodiment in aspects of detail only.

CLAIMS

1. A sheave assembly comprising a rim provided with a circumferential rope receiving groove, the groove being bordered by a base surface and opposing side surfaces, the groove defining a seat zone towards the inner extremity thereof and a guide zone towards the outer extremity thereof; the opposing surfaces of the groove in the guide zone diverging relative to one another in the outward direction and the opposing surfaces of the groove in the seat zone converging relative to one another in the outward direction, the seat zone of the groove being fitted with a replaceable circumferential wearing arrangement constituted by a plurality of paired wedge-like rigid insert members, the cross-sectional configuration of the pairs when in operative disposition corresponding substantially with the cross-sectional configuration of the seat zone of the groove and the arrangement further including resilient compression means firmly sandwiched between one surface of the seat zone of the groove and the facing surface of an insert pair located in the seat zone.

2. The sheave assembly of claim 1 in which the seat zone of the groove of the sheave is constituted by a base and opposing walls extending upwardly from the base and symmetrically converging towards one another thereby providing a seat zone having a trapezoidal cross-sectional configuration.

3. The sheave assembly of claim 2 in which each of the pairs of insert members in operative registration of its members with one another collectively define a composite elongated block of generally trapezoidal cross-sectional configuration defining a wear surface and a base surface parallel thereto, the base surface being of larger surface area than the wear surface, and each insert pair registers along a split surface which extends at an angle to a notional longitudinal centre line of the composite block and at right angles to the base surface of the composite block constituted by the pairs.

4. The sheave assembly of claim 3 in which the insert elements are of a wear resistant metallic material.

5. The sheave assembly of claim 3 in which the insert elements are of a wear resistant polymeric material.

6. The sheave arrangement of claim 1 in which the compression means is in the form of a compression pad which is of suitable resilient material.

7. The sheave arrangement of claim 6 in which a compression pad is sandwiched between the base surfaces of each pair of the insert elements.

8. The sheave arrangement of claim 7 in which a compression pad is bonded to the base surface of each insert element.

9. The sheave arrangement of claim 6 in which the compression pad is sandwiched between a side surface of the seat zone of the groove and the facing surface of one of the members of each insert pair.

10. A method of providing a replaceable wear surface for a sheave assembly comprising a rim provided with a circumferential rope receiving groove, the groove being bordered by a base surface and opposing side surfaces, the groove defining a seat zone towards the inner extremity thereof and a guide zone towards the outer extremity thereof; the opposing surfaces of the groove in the guide zone diverging relative to one another in the outward direction and the opposing surfaces of the groove in the seat zone converging relative to one another in the outward direction, comprising the steps of locating a resilient compression pad against one of the surfaces defining the seat zone of the groove and locating in the seat zone a replaceable circumferential wearing arrangement constituted by a plurality of paired wedge-like rigid insert members, the cross-sectional configuration of the pairs when in operative disposition corresponding substantially with the cross-sectional configuration of the seat zone of the groove by placing the individual members of the paired insert elements in offset relationship with one another in the groove and urging the members into registration thereby firmly sandwiching the pad between one surface of the seat zone of the groove and the facing surface of an insert pair located in the seat zone.

FIG 1

FIG 2

| | DOCUMENTS CONSIDERED TO BE RELEVANT | | EP 85309124.7 |

| Category | Citation of document with indication, where appropriate, of relevant passages | Relevant to claim | CLASSIFICATION OF THE APPLICATION (Int. Cl 4) |
|---|---|---|---|
| X | DE - C - 810 216 (OXE)<br>* Totality * | 1,2,3,<br>4,6,10 | F 16 H 55/50 |
| X | DE - C - 934 318 (OXE)<br>* Totality * | 1,2,3,<br>4,6 | |
| X | DE - B - 1 179 055 (OXE)<br>* Totality * | 5,10 | |
| A | DE - C - 505 235 (POHLIG AG)<br>* Totality * | - | |
| A | DE - C - 809 616 (OXE)<br>* Totality * | | |
| A | DE - C - 838 383 (BECORIT-GES.)<br>* Totality * | | TECHNICAL FIELDS SEARCHED (Int. Cl.4)<br><br>F 16 H 55/00 |
| A | DE - C - 957 267 (OXE)<br>* Totality * | | |
| A | DE - C - 968 615 (OXE)<br>* Totality * | | |
| A | DE - B - 1 077 009 (BECORIT-GES.)<br>* Totality * | | |

The present search report has been drawn up for all claims

| Place of search | Date of completion of the search | Examiner |
|---|---|---|
| VIENNA | 05-03-1986 | SCHATEK |